# EUROPEAN PATENT SPECIFICATION

(11) **EP 0 532 117 B1**
(45) Date of publication and mention of the grant of the patent: **12.08.1998**
(21) Application number: 92202741.2
(22) Date of filing: 09.09.1992
(51) Int. Cl.: B01J 23/42, B01J 37/02

(54) **Hydroconversion catalyst**
Hydroumwandlungskatalysator
Catalyseur d'hydroconvertion

(30) Priority: 12.09.1991 GB 9119494
(43) Date of publication of application: 17.03.1993
(73) Proprietor: SHELL INTERNATIONALE RESEARCH MAATSCHAPPIJ B.V., 2596 HR Den Haag (NL)
(72) Inventor: Gilson, Jean-Pierre, NL-1031 CM Amsterdam (NL); Klazinga, Aan Hendrik, NL-1031 CM Amsterdam (NL); Hoek, Arend, NL-1031 CM Amsterdam (NL); Van Ballegoy, Carolus Maria, NL-1031 CM Amsterdam (NL); Daamen, Jacobus Theodorus, NL-1031 CM Amsterdam (NL)

(56) References cited:
- EP-A- 488 514
- CA-A- 1 234 396
- US-A- 3 067 128

## Description

The present invention relates to a catalyst of use in hydroconversion processes, more especially to a catalyst for use in the preparation of middle distillates from higher boiling range hydrocarbons, in particular the liquid hydrocarbon products of a Fischer-Tropsch synthesis process.

The preparation of hydrocarbons from a gaseous mixture comprising carbon monoxide and hydrogen by contacting the mixture with a suitable catalyst at elevated temperatures and pressures is a well known process, referred to in the art as the Fischer-Tropsch process.

Recently, much attention has been paid to processes for the preparation of middle distillate fuels, which processes comprise two stages; a first stage in which high boiling range hydrocarbons are prepared from a mixture of carbon monoxide and hydrogen by means of the Fischer-Tropsch process, and a second stage in which the hydrocarbons so-produced are subjected to a hydroconversion process yielding the desired middle distillates.

For the purposes of this specification, the term "middle distillates" is to be taken as a reference to hydrocarbons or hydrocarbon mixtures having a boiling point or boiling point range substantially corresponding to that of the kerosine and gasoil fractions obtained during the conventional atmospheric distillation of crude oil. In a typical distillation, the following fractions are consecutively recovered from the crude oil: one or more naphtha (sometimes referred to as gasoline) fractions boiling in the range of from 30 to 220 °C, one or more kerosine fractions boiling in the range of from 140 to 300 °C and one or more gasoil fractions boiling in the range of from 180 to 370 °C.

Thus, UK patent application publication No. 2 077 289 (GB-A-2 077 289) and European patent applications publication numbers 0 127 220 and 0 147 873 (EP-A-0 127 220 and EP-A-0 147 873) each disclose a process for the preparation of middle distillates in which a mixture of carbon monoxide and hydrogen is converted in a first stage into high boiling range hydrocarbons by means of the Fischer-Tropsch process, which hydrocarbons are then subjected to a catalytic hydroconversion. The specifications of the aforementioned patent applications disclose a range of possible catalyst compositions for use in the hydroconversion stage of the process, with preference being given in each case to catalysts comprising a Group VIII metal as catalytically active component on a suitable carrier. Particular preference is given to catalysts comprising platinum. Suitable carriers are stated in GB-A-2 077 289 to be amorphous oxides of the elements in Groups II, III and IV of the Periodic Table of Elements, such as silica, alumina, magnesia, zirconia, as well as mixtures thereof, including silica-alumina, silica-magnesia and silica-zirconia, and zeolitic materials such as mordenite and faujasite. Alumina and silica-alumina are said to be preferred carrier materials.

The specifications of all of GB-A-2 077 289, EP-A-0 127 220 and EP-A-0 147 873 specifically exemplify the use of a platinum/silica-alumina catalyst comprising 0.82 parts by weight of platinum per 100 parts by weight of carrier, which carrier consists of 14.6% by weight of alumina and 85.4% by weight of silica, in the hydroconversion stage of the middle distillate preparation.

In processes in which it is desired to produce middle distillates in high yields from the high boiling range products of the Fischer-Tropsch synthesis there is a need for a hydroconversion catalyst which exhibits both a high level of intrinsic activity in combination with a high selectivity to middle distillates.

Platinum/silica-alumina catalysts are known in the art for application in the hydroconversion of various hydrocarbon products.

JP-A-850212812 relates to a method for controlling particle size of metals in supported metal catalysts. The particle size of the metal particles may be varied by changing the diameter of the pores of the carrier and/or the pore volume of the carrier. Suitable carriers include silica, alumina and silica-alumina.

US-A-3637484 describes a platinum group metal on a silica-alumina hydrogenation catalyst. The silica-alumina support typically has a pore volume in the range of 0.8 to 2.0 ml/g. Platinum is not impregnated on the support, but is ion-exchanged under basic conditions.

US-A-3684742 describes a catalyst comprising a platinum group metal on a silica-alumina carrier. The catalyst is particularly effective in the preparation of liquid petroleum gas by hydrocracking of hydrocarbon fractions boiling in the middle distillate range.

US-A-3067128 describes a process for the preparation of catalysts comprising a carrier of pores of enlarged diameter. In the examples the impregnation of a platinum salt on alumina under non-acidic conditions is described. For example, UK patent No. 1 451 617 (GB 1 451 617) discloses a process for the preparation of medicinal oils in which a hydrocarbon mixture having a low aromatic content is contacted at elevated temperature and pressure with a catalyst comprising one or more noble metals from Group VIII on a carrier which contains 13 to 15% by weight of alumina, the remainder being silica. Catalysts specifically exemplified in GB 1 451 617 comprise platinum supported on silica-alumina carriers having surface areas ranging from 110 to 518 m²/g and a pore volumes ranging from 0.34 to 0.87 ml/g. The catalysts were prepared by impregnating the carrier material with an aqueous solution of chloroplatinic acid.

Document CA-A-1234396 describes a catalyst of Pt supported on silica-alumina which is used to hydrocrack hydrocarbon product, produced by the Fischer-Tropsch process, to give a middle distillate product.

It has now been found that the aforementioned catalysts described and exemplified in GB 1 451 617 are suitable for use in the hydroconversion of high boiling range hydrocarbons, produced by the Fischer-Tropsch process, as a means of preparing middle distillates.

However, most surprisingly, there has been found a novel catalyst composition which is active as a hydroconversion catalyst. In particular, a novel catalyst composition has been found which, when used in the hydroconversion of hydrocarbons produced by the Fischer-Tropsch synthesis, most advantageously exhibits both a high level of activity and a high degree of selectivity to middle distillates.

Accordingly, the present invention provides a catalyst comprising platinum supported on a silica-alumina carrier, which carrier has been prepared from an amorphous silica-alumina having a pore volume of at least 1.0 ml/g, the carrier having been impregnated with the platinum by a process comprising contacting the carrier with a platinum salt in the presence of a liquid under acidic conditions, with the disclaimer that if the carrier has been impregnated with an aqueous solution of chloroplatinic acid, the carrier is not a silica-alumina heterogeneous cogel prepared by mulling about 27 parts by dry weight of silica-alumina with 73 parts by dry weight of a hydrous alumina gel, followed by spray drying, rehomogenization with added water and extrusion, the resulting carrier having a pore volume of 1.19 ml/g after calcination at 600°C. This disclaimer is included in view of the disclosure of comparative example III in US-A-3637484.

The novel catalyst is of use in hydroconversion processes. The term "hydroconversion" is used herein in its broadest sense, as a reference to conversion processes occurring in the presence of hydrogen and ranging in severity, for example, from hydrocracking to mild hydrogenation processes.

The carrier for the catalyst of the present invention is amorphous silica-alumina. The term "amorphous" indicates a lack of crystal structure, as defined by X-ray diffraction, in the carrier material, although some short range ordering may be present. Amorphous silica-alumina suitable for use in preparing the catalyst is available commercially. Alternatively, the silica-alumina may be prepared by precipitating alumina or a silica hydrogel and subsequently drying and calcining the resulting material, as described in GB 1 451 617.

The catalyst may comprise any suitable amorphous silica-alumina. The amorphous silica-alumina preferably contains alumina in an amount in the range of from 5 to 30% by weight, more preferably from 10 to 20% by weight, especially from 12 to 15% by weight.

To achieve a high degree of selectivity of the catalyst for middle distillates, it is important that the pore volume of the amorphous silica-alumina starting material be at least 1.0 ml/g. For the purposes of this specification, all pore volumes quoted in relation to the catalyst of the present invention are references to pore volumes measured by a method involving the uptake of water into the pores of the material, often referred to as the incipient wetness method, and are generally indicated as pore volume (H₂O).

A typical procedure for determining the pore volume (H₂O) of a catalyst or carrier material comprises drying the material at a temperature of about 500°C; weighing the dried material; immersing the material in water for a period of about 15 minutes; removing the material from the water; removing the water on the surface of the material by means of a centrifuge; and weighing the resulting material. The pore volume of the material is determined from the difference between the weight of the dried material and the weight of the resulting material.

The pore volume of the amorphous silica-alumina is preferably in the range of from 1.0 to 2.0 ml/g, more preferably from 1.0 to 1.5 ml/g.

In addition to silica-alumina, the carrier may also comprise one or more binder materials. Suitable binder materials include inorganic oxides. Both amorphous and crystalline binders may be applied. Examples of binder materials comprise silica, alumina, clays, magnesia, titania, zirconia and mixtures thereof. Silica and alumina are preferred binders, with alumina being especially preferred. The binder, if incorporated in the catalyst, is preferably present in an amount of from 5 to 50% by weight, more preferably from 15 to 30% by weight, on the basis of total weight of the carrier.

The catalyst of the present invention comprises platinum as a catalytically active component. Platinum is preferably present in an amount in the range of from 0.05 to 5.0% by weight, more preferably from 0.1 to 2.0% by weight, especially from 0.2 to 1.0% by weight, on the basis of total weight of carrier in the catalyst.

The platinum is deposited onto the carrier by means of impregnation, in which the carrier is contacted with a platinum salt in the presence of a liquid under acidic conditions. Preferably, the acidic conditions are such that the pH is no greater than 4.0, more preferably no greater than 3.0.

Most conveniently, the platinum salt and liquid are selected so that the salt is soluble in the liquid and the carrier is contacted with a platinum salt solution. Suitable liquids for use in the impregnation are both organic liquids, for example alcohols and ethers, and inorganic liquids, for example water. Water is a most convenient and especially preferred liquid.

Any suitable platinum salt may be used, with preference being given to salts soluble in the selected liquid. Suitable salts include both organic and inorganic salts. Examples of suitable salts are platinum dibromide, platinum dichloride, platinum trichloride, platinum tetrachloride, platinum dichlorocarbonyldichloride, platinum tetrafluoride and platinum sulphate.

A preferred catalyst is one prepared by an impregnation using a solution of an acidic platinum salt, the platinum salt providing both a source for the platinum and giving rise to the required conditions of acidity. Preferred acid salts for such functions are hexachloroplatinic acid, tetracyanoplatinic acid, hexahydroxyplatinic acid, platinum monohydroxychloric acid and platinum (III) sulphuric acid. Hexachloroplatinic acid is an especially preferred acid platinum salt.

If an acid platinum salt is not used in the impregnation of the carrier, the impregnation is effected in the presence of an additional acid. More preferably, both an acid platinum salt and an additional acid are present during the impregnation of the carrier. Suitable acids for use during the impregnation include both organic and inorganic acids, for example mono- and dicarboxylic acids, hydrochloric acid, sulphuric acid and nitric acid. Nitric acid is a particularly preferred acid. An especially preferred catalyst is one prepared by impregnation of the carrier using a combination of hexachloroplatinic acid and nitric acid.

If the catalyst of the present invention is prepared by means of impregnation in the presence of both an acidic platinum salt and an additional acid, the additional acid is preferably present in an amount in excess of the amount of acid platinum salt, the molar ratio of additional acid to acid platinum salt preferably being in the range of from 2 to 30, more preferably from 5 to 25.

In a second aspect, the present invention provides a process for the preparation of a catalyst as hereinbefore described, which process comprises preparing a carrier from an amorphous silica-alumina having a pore volume of at least 1.0 ml/g and impregnating the carrier so-formed with platinum by contacting the carrier with a platinum salt in the presence of a liquid under acidic conditions.

The carrier may be prepared from the amorphous silica-alumina by methods known to the skilled person in the art. A preferred method for the preparation of the carrier comprises mulling a mixture of the amorphous silica-alumina and a suitable liquid, extruding the mixture and drying the resulting extrudates.

The mixture to be extruded should, preferably, have a solids content in the range of from 20 to 60% by weight.

The liquid for inclusion in the mixture may be any of the suitable liquids known in the art. Examples of suitable liquids include water; alcohols, such as methanol, ethanol and propanol; ketones, such as acetone; aldehydes, such as proponal, and aromatic liquids, such as toluene. A most convenient and preferred liquid is water.

To obtain strong extrudates, the mixture preferably includes a peptizing agent. Suitable peptizing agents are acidic compounds, for example inorganic acids such as aqueous solutions of hydrogen fluoride, hydrogen bromide and hydrogen chloride, nitric acid, nitrous acid and perchloric acid. Preferably, the peptizing agent is an organic acid, for example a mono- or dicarboxylic acid. Preferred organic acids include acetic acid, propionic acid and butanoic acid. Acetic acid is a most preferred peptizing agent.

The amount of peptizing agent included in the mixture should be sufficient to fully peptize the alumina present in the carrier material, and can be readily determined by the pH of the mixture. During mulling, the pH of the mixture should preferably lie in the range of from 1 to 6, more preferably from 4 to 6.

To improve the flow properties of the mixture, it is preferred to include one or more flow improving agents and/or extrusion aids in the mixture prior to extrusion. Suitable additives for inclusion in the mixture include fatty amines, quaternary ammonium compounds, aliphatic mono-carboxylic acids, ethoxylated alkyl amines, polyvinyl pyridine, and sulphoxonium, sulphonium, phosphonium and iodonium compounds, alkylated aromatic compounds, acyclic mono-carboxylic acids, fatty acids, sulphonated aromatic compounds, alcohol sulphates, ether alcohol sulphates, sulphated fats and oils, phosphonic acid salts, polyoxyethylene alkylphenols, polyoxyethylene alcohols, polyoxyethylene alkylamines, polyoxyethylene alkylamides, polyacrylamides, polyols and acetylenic glycols. Preferred agents are sold under the trademarks Nalco and Superfloc.

The flow improving agents/extrusion aids are preferably present in the mixture in a total amount in the range of from 1 to 20% by weight, more preferably from 2 to 10% by weight, on the basis of the total weight of the mixture.

In principle, the components of the mixture may be combined in any order, and the mixture mulled. Preferably, the amorphous silica-alumina and the binder, if present, are combined and the mixture mulled. Thereafter, the liquid and, if present, the peptizing agent are added and the resulting mixture further mulled. Finally, any flow improving agents/extrusion aids to be included are added and the resulting mixture mulled for a final period of time.

Typically, the mixture is mulled for a period of from 10 to 120 minutes, preferably from 15 to 90 minutes. During the mulling process, energy is input into the mixture by the mulling apparatus. The rate of energy input into the mixture is typically from 0.05 to 50 Wh/min/kg, preferably from 0.5 to 10 Wh/min/kg. The mulling process may be carried out over a broad range of temperature, preferably from 15 to 50 °C. As a result of the energy input into the mixture during the mulling process, there will be a rise in the temperature of the mixture during the mulling. The mulling process is conveniently carried out at ambient pressure. Any suitable, commercially available mulling apparatus may be employed.

Once the mulling process has been completed, the resulting mixture is then extruded. Extrusion may be effected using any conventional, commercially available extruder. In particular, a screw-type extruding machine may be used to force the mixture through orifices in a suitable dieplate to yield extrudates of the desired form. The strands formed upon extrusion may be cut to the desired length.

The extrudates may have any suitable form known in the art, for example cylindrical, hollow cylindrical, multilobed or twisted multilobed. A preferred shape for the catalyst particles of the present invention is cylindrical. Typically, the extrudates have a nominal diameter of from 0.5 to 5 mm, preferably from 1 to 3 mm.

After extrusion, the extrudates are dried. Drying may be effected at an elevated temperature, preferably up to 800 °C, more preferably up to 300 °C. The period for drying is typically up to 5 hours, preferably from 30 minutes to 3 hours.

Preferably, the extrudates are calcined after drying. Galcination is effected at an elevated temperature, preferably up to 1000 °C, more preferably from 200 °C to 1000 °C, most preferably from 300° to 800 °C. Calcination of the extrudates is typically effected for a period of up to 5 hours, preferably from 30 minutes to 4 hours.

Once prepared, the carrier is subjected to an impregnation stage, in which platinum is emplaced on the carrier. Impregnation is effected by contacting the carrier with a platinum salt in the presence of a liquid under acidic conditions, as hereinbefore described. The carrier may be contacted with the platinum salt by immersion in the liquid in which the salt has been suspended or, more preferably, dissolved.

A preferred impregnation technique for use in the process of the present invention is the pore volume impregnation technique, in which the carrier is contacted with a solution of the platinum salt, the solution being present in a sufficient volume so as to substantially just fill the pores of the carrier material. A convenient method for effecting impregnation is by spraying the carrier with the requisite quantity of the solution.

After impregnation, the resulting catalyst is preferably dried and preferably calcined. The conditions for drying and calcining are as set out hereinbefore.

The catalyst of the present invention is active as a hydroconversion catalyst and may be used in such processes as alkane hydroisomerisation and hydrocracking. However, as discussed above, the catalyst exhibits particular activity in the selective hydroconversion of high boiling range hydrocarbons to prepare middle distillates, especially the hydroconversion of high boiling range products of the Fischer-Tropsch synthesis process.

In the Fischer-Tropsch synthesis process, a gaseous mixture comprising carbon monoxide and hydrogen is contacted with a suitable catalyst at an elevated temperature and pressure, to yield hydrocarbons. Preferably, the catalyst employed comprises a metal from the iron group of Group VIII of the Periodic Table of elements as catalytically active component, optionally in association with one or more promoters. A most suitable Fischer-Tropsch catalyst comprises cobalt as a catalytically active component and zirconium as a promoter supported on a refractory oxide carrier, for example alumina, silica, titania, zirconia or mixtures thereof.

The high boiling range hydrocarbon products of the Fischer-Tropsch synthesis may then be contacted with the catalyst of the present invention in the presence of hydrogen and catalytically hydroconverted to yield the desired middle distillates. Typical process conditions for carrying out the hydroconversion stage are a temperature of from 175 to 400 °C, preferably from 250 to 375 °C; a hydrogen gas hourly space velocity of from 100 to 10000 Nl/l/hr, preferably from 500 to 5000 Nl/l/hr; a hydrogen partial pressure of from 1.0 to 25 MPa (10 to 250 bars), preferably from 2.5 to 15 MPa (25 to 150 bars); a space velocity of from 0.1 to 5 kg/l/hr, preferably from 0.25 to 2 kg/l/h; and a hydrogen to oil ratio of from 100 to 5000 Nl/kg, preferably from 250 to 2500 Nl/kg.

Typical processes in which the catalyst of the present invention may be applied are disclosed in GB-A-2 077 289, EP-A-0 127 220 and EP-A-0 147 873.

The present invention is further described in the following illustrative example.

### EXAMPLE

### a) Catalyst Preparation

A mixture comprising amorphous silica-alumina (ex Grace Davison, pore volume (H₂O) 1.10 ml/g, 13% wt alumina (dry basis); 1834.9g) and alumina (ex Criterion Catalyst Co.; 554.8g) was placed in a mulling machine and mulled for a period of 10 minutes. Acetic acid (10% wt aqueous solution; 200.0g) and water (2190.3g) were added and the resulting mixture mulled for a further 10 minutes. Thereafter, polyacrylamide (Superfloc A1839, 2% wt aqueous solution; 40.0g) was added and mulling continued for a further 10 minutes. Finally, polyelectrolyte (Nalco, 4% wt aqueous solution; 80.0g) was added and the mixture mulled for a final period of 5 minutes.

The resulting mixture was extruded using a 5.7 cm (2.25") Bonnot extruder through a cylindrical dieplate, yielding 1.7mm diameter cylindrical extrudates. The resulting extrudates were dried at a temperature of 120 °C for 2 hours and subsequently calcined at a temperature of 600 °C for 2 hours.

An aqueous solution was prepared comprising hexachloroplatinic acid (H₂PtCl₆, 2.45% wt) and nitric acid (7.66% wt) having a pH of below 1. The cylindrical carrier particles were impregnated using this aqueous solution via the Pore Impregnation technique to give a final platinum loading on the carrier of 0.8% wt. The thus impregnated carrier particles were then calcined at a temperature of 500 °C for a period of 1 hour to yield the final catalyst.

### b) Fischer-Tropsch synthesis

A wax was prepared using the Fischer-Tropsch synthesis by the following method:

A catalyst comprising cobalt (18.3% wt, present as cobalt oxide), zirconium (8.5% wt, present as zirconium oxide) and silica was loaded into a fixed bed reactor. The catalyst was contacted with a mixture of carbon monoxide and hydrogen having a hydrogen to carbon monoxide molar ratio of 1.1, fed at a gas hourly space velocity of from 1120 to 1130 Nl/l/h at a pressure of 3.6 MPa (36 bars) and a temperature of from 210 to 225 °C. A heavy wax was produced, from which a fraction having a boiling point range of 370+ °C was separated.

### c) Middle Distillate Preparation

The catalyst prepared in (a) above was used to prepare middle distillates by the hydroconversion of the 370+ °C fraction of the heavy wax produced in the Fischer-Tropsch synthesis process of (b) above. The test procedure used was as follows:

A sample of the catalyst prepared in (a) above was loaded into a fixed bed reactor. The catalyst was contacted with the 370+ °C fraction of heavy wax and hydrogen at a hydrogen gas hourly space velocity of 1000 Nl/l/hr, a wax hourly weight space velocity of 1.25 kg/l/hr and at a pressure of 3.0 MPa (30 bars). The temperature was adjusted to 340 °C in order to achieve a wax conversion of 60% wt. As representative of a middle distillate product, the fraction of the reactor effluent having a boiling point range of from 220 to 370 °C was separated. At a conversion of 60% wt, the catalyst exhibited a selectivity to middle distillates of 50% wt.

### d) Alkane Hydroisomerisation

The catalyst prepared in (a) above was tested for activity as an alkane hydroisomerisation catalyst, taking as a representative test the preparation of iso-C₇ compounds from n-heptane. The test procedure was as follows:

A sample of the catalyst prepared as in (a) above was loaded into a reactor. The catalyst was contacted with a feed mixture comprising n-heptane and hydrogen in a molar ratio of hydrogen to n-heptane of 4.0, at a weight hourly space velocity of 1.0 kg/l/hr, at a pressure of 30 bars and a temperature of 340 °C. A conversion of n-heptane of 54.3% wt was recorded with a selectivity to iso-C₇ compounds of 93.0% wt.

## Claims

1. A catalyst comprising platinum supported on a silica-alumina carrier, which carrier has been prepared from an amorphous silica-alumina having a pore volume of at least 1.0 ml/g, the catalyst having been impregnated with the platinum by a process comprising contacting the carrier with a platinum salt in the presence of a liquid under acidic conditions, with the proviso that if the carrier has been impregnated with an aqueous solution of chloroplatinic acid, the carrier is not a silica-alumina heterogeneous cogel prepared by mulling about 27 parts by dry weight of a silica-alumina with 73 parts by dry weight of a hydrous alumina gel, followed by spray drying, rehomogenization with added water and extrusion, the resulting carrier having a pore volume of 1.19 ml/g after calcination at 600 °C.

2. A catalyst according to claim 1, characterised in that the amorphous silica-alumina comprises alumina in an amount in the range of from 5 to 30% by weight, preferably 10 to 20% by weight, more preferably 12 to 15% by weight.

3. A catalyst according to either of claims 1 or 2, characterised in that the pore volume of the amorphous silica-alumina is in the range of from 1.0 to 2.0 ml/g, preferably from 1.0 to 1.5 ml/g.

4. A catalyst according to any one of claims 1 to 3, characterised in that the carrier comprises a binder, preferably selected from silica, alumina, clays, titania, zirconia and mixtures thereof, more preferably alumina.

5. A catalyst according to claim 4, characterised in that the binder is present in an amount in the range of from 5 to 50% by weight, preferably from 15 to 30% by weight, on the basis of total weight of the carrier.

6. A catalyst according to any preceding claim, characterised in that platinum is present in an amount in the range of from 0.05 to 5% by weight, preferably 0.1 to 2.0% by weight, more preferably from 0.2 to 1.0% by weight, on the basis of total weight of the carrier.

7. A catalyst according to any preceding claim, characterised in that the carrier has been contacted with the platinum salt at a pH of no greater than 4.0, preferably no greater than 3.0.

8. A catalyst according to any preceding claim, characterised in that the carrier has been contacted with the platinum salt in the presence of an acid selected from monocarboxylic acids, dicarboxylic acids, hydrochloric acid, sulphuric acid and nitric acid, preferably nitric acid.

9. A catalyst according to any preceding claim, characterised in that the platinum salt is an acid platinum salt, preferably an acid platinum salt selected from hexachloroplatinic acid, tetracyanoplatinic acid, hexahydroxyplatinic acid, platinum monohydroxychloric acid and platinum (III) sulphuric acid, more preferably hexachloroplatinic acid.

10. A process for the preparation of a catalyst as defined in any of the preceding claims, which process comprises preparing a carrier from an amorphous silica-alumina having a pore volume of at least 1.0 ml/g and impregnating the carrier so-formed with platinum by contacting the carrier with a platinum salt in the presence of a liquid under acidic conditions.

11. A process according to claim 10, characterised in that the carrier is prepared by a process comprising mulling a mixture comprising amorphous silica-alumina and a liquid, extruding the resulting mixture and drying the extrudates so-obtained.

12. A process according to either of claims 10 or 11, characterised in that the mixture comprises a peptizing agent, preferably acetic acid.

13. A process according to any one of claims 10 to 12, characterised in that the pH of the mixture prior to extrusion is in the range of from 1 to 6, preferably from 4 to 6.

14. A process according to any one of claims 10 to 13, characterised in that the carrier is calcined prior to impregnation, calcining preferably being effected at a temperature of up to 1000 °C, more preferably from 200 to 1000 °C, especially from 300 to 800 °C.

15. A process according to any one of claims 10 to 14, characterised in that impregnation of the carrier is effected by means of the pore volume impregnation technique.

16. The use of a catalyst according to any one of claims 1 to 9 as a hydroconversion catalyst, in the hydroisomerisation of alkanes.

## Patentansprüche

1. Katalysator mit einem Gehalt an Platin, aufgebracht auf einen Siliziumdioxid-Aluminiumoxidträger, welcher Träger aus einem amorphen Siliziumdioxid-Aluminiumoxid mit einem Porenvolumen von wenigstens 1,0 ml/g hergestellt worden ist, wobei der Katalysator mit dem Platin nach einem Verfahren imprägniert worden ist, das ein Kontaktieren des Trägers mit einem Platinsalz in Gegenwart einer Flüssigkeit unter sauren Bedingungen umfaßt, mit der Maßgabe, daß dann, wenn der Träger mit einer wäßrigen Lösung von Chlorplatinsäure imprägniert worden ist, der Träger nicht ein Siliziumdioxid-Aluminiumoxid-heterogenes Cogel ist, das durch Mahlen von etwa 27 Trockengewichtsteilen eines Siliziumdioxid-Aluminiumoxids mit 73 Trockengewichtsteilen eines wäßrigen Aluminiumoxidgels, anschließendes Sprühtrocknen, Rehomogenisieren mit zugesetztem Wasser und Extrudieren hergestellt wurde, wobei der erhaltene Träger ein Porenvolumen von 1,19 ml/g nach einem Kalzinieren bei 600°C aufweist.

2. Katalysator nach Anspruch 1, dadurch gekennzeichnet, daß das amorphe Siliziumdioxid-Aluminiumoxid das Aluminiumoxid in einer Menge im Bereich von 5 bis 30 Gew.-%, vorzugsweise 10 bis 20 Gew.-%, stärker bevorzugt 12 bis 15 Gew.-% umfaßt.

3. Katalysator nach Anspruch 1 oder 2, dadurch gekennzeichnet, daß das Porenvolumen des amorphen Siliziumdioxid-Aluminiumoxids im Bereich von 1,0 bis 2,0 ml/g, vorzugsweise von 1,0 bis 1,5 ml/g liegt.

4. Katalysator nach einem der Ansprüche 1 bis 3, dadurch gekennzeichnet, daß der Träger ein Bindemittel umfaßt, vorzugsweise ausgewählt unter Siliziumdioxid-Aluminiumoxid, Tonen, Titanoxid, Zirkonoxid und Gemischen hievon, stärker bevorzugt Aluminiumoxid.

5. Katalysator nach Anspruch 4, dadurch gekennzeichnet, daß das Bindemittel in einer Menge im Bereich von 5 bis 50 Gew.-%, vorzugsweise von 15 bis 30 Gew.-%, bezogen auf das Gesamtgewicht des Trägers, vorliegt.

6. Katalysator nach einem der vorstehenden Ansprüche, dadurch gekennzeichnet daß das Platin in einer Menge im Bereich von 0,05 bis 5 Gew.-%, vorzugsweise 0,1 bis 2,0 Gew.-%, stärker bevorzugt von 0,2 bis 1,0 Gew.-%, bezogen auf das Gesamtgewicht des Trägers, vorliegt.

7. Katalysator nach einem der vorstehenden Ansprüche, dadurch gekennzeichnet, daß der Träger mit dem Platinsalz bei einem pH-Wert von nicht größer als 4,0, vorzugsweise nicht größer als 3,0 in Kontakt gebracht worden ist.

8. Katalysator nach einem der vorstehenden Ansprüche, dadurch gekennzeichnet, daß der Träger mit dem Platinsalz in Gegenwart einer unter Monocarbonsäuren, Dicarbonsäuren, Chlorwasserstoffsäure, Schwefelsäure und Salpetersäure ausgewählten Säure, vorzugsweise Salpetersäure, in Kontakt gebracht worden ist.

9. Katalysator nach einem der vorstehenden Ansprüche, dadurch gekennzeichnet, daß das Platinsalz ein saures Platinsalz ist, vorzugsweise ein unter Hexachlorplatinsäure, Tetracyanoplatinsäure, Hexahydroxyplatinsäure, Platinmonohydroxychlorsäure und Platin(III)schwefelsäure ausgewähltes saures Platinsalz ist, stärker bevorzugt Hexachlorplatinsäure.

10. Verfahren zur Herstellung eines Katalysators, wie in einem der vorstehenden Ansprüche definiert, welches Verfahren ein Herstellen eines Trägers aus einem amorphen Siliziumdioxid-Aluminiumoxid mit einem Porenvolumen von wenigstens 1,0 ml/g und ein Imprägnieren des so gebildeten Trägers mit Platin durch Kontaktieren des Trägers mit einem Platinsalz in Gegenwart einer Flüssigkeit unter sauren Bedingungen umfaßt.

11. Verfahren nach Anspruch 10, dadurch gekennzeichnet daß der Träger durch ein Verfahren hergestellt wird, das ein Mahlen eines amorphes Siliziumdioxid-Aluminiumoxid und eine Flüssigkeit umfassenden Gemisches, ein Extrudieren des gebildeten Gemisches und ein Trocknen der so erhaltenen Extrudate umfaßt.

12. Verfahren nach Anspruch 10 oder 11, dadurch gekennzeichnet, daß das Gemisch ein Peptisierungsmittel, vorzugsweise Essigsäure umfaßt.

13. Verfahren nach einem der Ansprüche 10 bis 12, dadurch gekennzeichnet, daß der pH-Wert des Gemisches vor dem Extrudieren im Bereich von 1 bis 6, vorzugsweise von 4 bis 6 liegt.

14. Verfahren nach einem der Ansprüche 10 bis 13, dadurch gekennzeichnet, daß der Träger vor dem Imprägnieren kalziniert wird, wobei das Kalzinieren vorzugsweise bei einer Temperatur von bis zu 1.000°C, stärker bevorzugt von 200 bis 1.000°C, insbesondere von 300 bis 800°C ausgeführt wird.

15. Verfahren nach einem der Ansprüche 10 bis 14, dadurch gekennzeichnet, daß das Imprägnieren des Trägers nach der Porenvolumenimprägniertechnik vorgenommen wird.

16. Verwendung eines Katalysators nach einem der Ansprüche 1 bis 9 als ein Hydrokonversionskatalysator oder in der Hydroisomerisation von Alkanen.

## Revendications

1. Catalyseur comprenant du platine supporté par un véhicule de silice-alumine, lequel véhicule a été préparé à partir d'une silice-alumine amorphe possédant un volume des pores d'au moins 1,0 ml/g, le catalyseur ayant été imprégné du platine par un procédé comprenant la mise en contact du véhicule avec un sel de platine en présence d'un liquide et dans des conditions acides, avec la condition que si le véhicule a été imprégné par une solution aqueuse d'acide chloroplatinique, le véhicule ne soit pas un cogel hétérogène de silice-alumine préparé par le broyage d'environ 27 parties en poids à sec de silice-alumine avec 73 parties en poids à sec de gel d'alumine hydraté, suivi du séchage par pulvérisation, de la ré-homogénéisation avec eau ajoutée et d'une extrusion, le véhicule résultant possédant un volume des pores de 1,19 ml/g, après calcination à 600°C.

2. Catalyseur suivant la revendication 1, caractérisé en ce que la silice-alumine amorphe comprend de l'alumine en une proportion de 5 à 30% en poids, de préférence, de 10 à 20% en poids, plus avantageusement, de 12 à 15% en poids.

3. Catalyseur suivant l'une quelconque des revendications 1 et 2, caractérisé en ce que le volume des pores de la silice-alumine amorphe varie de 1,0 à 2,0 ml/g, de préférence, de 1,0 à 1,5 ml/g.

4. Catalyseur suivant l'une quelconque des revendications 1 à 3, caractérisé en ce que le véhicule comprend un liant, de préférence, choisi parmi la silice, l'alumine, les argiles, l'oxyde de titane, la zircone et leurs mélanges, plus avantageusement, l'alumine.

5. Catalyseur suivant la revendication 4, caractérisé en ce que le liant est présent en une quantité qui varie de 5 à 50% en poids, de préférence, 15 à 30% en poids, sur base du poids total du véhicule.

6. Catalyseur suivant l'une quelconque des revendications précédentes, caractérisé en ce que le platine est présent en une quantité qui varie de 0,05 à 5% en poids, de préférence, 0,1 à 2,0% en poids, plus avantageusement, de 0,2 à 1,0% en poids, sur base du poids total du véhicule.

7. Catalyseur suivant l'une quelconque des revendications précédentes, caractérisé en ce que le véhicule a été mis en contact avec le sel de plaine à un pH non supérieur à 4,0, de préférence, non supérieur à 3,0.

8. Catalyseur suivant l'une quelconque des revendications précédentes, caractérisé en ce que le véhicule a été mis en contact avec le sel de platine en présence d'un acide choisi parmi les acides monocarboxyliques, les acides dicarboxyliques, l'acide chlorhydrique, l'acide sulfurique et l'acide nitrique, de préférence, l'acide nitrique.

9. Catalyseur suivant l'une quelconque des revendications précédentes, caractérisé en ce que le sel de platine est un sel de platine acide, de préférence, un sel de platine acide choisi parmi l'acide hexachloroplatinique, l'acide tétracyanoplatinique, l'acide hexahydroxyplatinique, l'acide platine monohydroxychlorique et l'acide platine (III) sulfurique, de préférence, l'acide hexachloroplatinique.

10. Procédé de préparation d'un catalyseur suivant l'une quelconque des revendications précédentes, caractérisé en ce que l'on prépare un véhicule à partir d'une silice-alumine amorphe possédant un volume des pores d'au moins 1,0 ml/g et on imprègne le véhicule ainsi formé de platine, par mise en contact du véhicule avec un sel de platine, en présence d'un liquide et dans des conditions acides.

11. Procédé suivant la revendication 10, caractérisé en ce que l'on prépare le véhicule par un procédé comprenant le broyage d'un mélange comprenant de la silice-alumine amorphe et un liquide, on extrude le mélange résultant et on sèche les extrudats ainsi obtenus.

12. Procédé suivant l'une quelconque des revendications 10 et 11, caractérisé en ce que le mélange comprend un agent de peptisation, de préférence, l'acide acétique.

13. Procédé suivant l'une quelconque des revendications 10 à 12, caractérisé en ce que le pH du mélange avant l'extrusion varie de 1 à 6, de préférence, de 4 à 6.

14. Procédé suivant l'une quelconque des revendications 10 à 13, caractérisé en ce que l'on calcine le véhicule avant l'imprégnation, la calcination étant de préférence entreprise à une température s'élevant jusqu'à 100°C, plus avantageusement, de 200 à 1000°C, mieux encore, de 300 à 800°C.

15. Procédé suivant l'une quelconque des revendications 10 à 14, caractérisé en ce que l'on entreprend l'imprégnation du véhicule par une technique d'imprégnation du volume des pores.

16. Utilisation du catalyseur suivant l'une quelconque des revendications 1 à 9, à titre de catalyseur d'hydroconversion dans l'hydroisomérisation d'alcanes.
